**Europäisches Patentamt**

**European Patent Office**

**Office européen des brevets**

(11) Veröffentlichungsnummer: **0 342 602**
**A1**

(12) # EUROPÄISCHE PATENTANMELDUNG

(21) Anmeldenummer: 89108770.2

(22) Anmeldetag: 16.05.89

(51) Int. Cl.⁴: **G21C 19/30 , G21C 9/00 , F23Q 3/00**

(30) Priorität: 17.05.88 DE 3816711

(43) Veröffentlichungstag der Anmeldung:
23.11.89 Patentblatt 89/47

(84) Benannte Vertragsstaaten:
**ES**

(71) Anmelder: **Siemens Aktiengesellschaft**
**Wittelsbacherplatz 2**
**D-8000 München 2(DE)**

(72) Erfinder: **Heck, Reinhard, Dipl.-Ing.**
**Kurfürstenstrasse 43**
**D-6450 Hanau(DE)**

(54) Einrichtung zur kontrollierten Verbrennung eines zündfähigen Wasserstoff-Luft-Gemisches in einer kerntechnischen Anlage.

(57) Zur gezielten, frühzeitigen Zündung von $H_2$-Luft-Gemischen bei niedriger $H_2$-Konzentration, die in kerntechnischen Anlagen, insbesondere im Containment von Leichtwasserreaktoren bei einem Störfall auftreten können, ist eine Zündquelle mit einem autarken, in regelmäßigen Zeitabständen auf seinen Ladezustand überprüfbaren Energiespeicher (100) versehen. Die Auslösung des Zündvorganges mittels Zündfunken zwischen den Zündelektroden (6a, 6b) erfolgt durch temperaturabhängig und druckabhängig ansprechende Auslöseelemente (AE1, AE2), wobei die Entladung des Energiespeichers (100) in den Funkenzünder (6) während eines längeren Zeitraumes, der störfallabhängig mehrere Tage betragen kann, sich in zeitlichen Abständen wiederholt. Die zeitlichen Abstände können z.B. mehrere Minuten betragen und hängen von der erneuten Bildung zündfähiger Wasserstoff-Luft-Gemische ab. Als Energiespeicher eignet sich eine Trockenbatterie (100), insbesondere ein Lithium-Sammler. Letzterer ist auch bei Temperaturen um 200 °C funktionstüchtig. Als Auslöseelemente (AE1, AE2), die die Zündquelle zur Erzeugung der Zündfunken am Funkenzünder (6) einer Hochspannungs-Zündeinheit (HS) aktivieren, kommen Thermo-und Druckschalter in Frage. Eine Funktionsüberprüfung der Batterie (100) und des Zündvorganges durch Reed-Kontakt-Betätigung von außen ist möglich.

FIG 3

# Einrichtung zur kontrollierten Verbrennung eines zündfähigen Wasserstoff-Luft-Gemisches in einer kerntechnischen Anlage

Die Erfindung bezieht sich auf eine Einrichtung zur kontrollierten Verbrennung eines Wasserstoff-Luft-Gemisches, enthalten im Gasgemisch in einer kerntechnischen Anlage, insbesondere im Containment von Kernreaktoranlagen, mit wenigstens einer Zündquelle, an die ein Funkenzünder angeschlossen ist.

Bei oder nach einem schweren Störfall kann im Sicherheitsbehälter eines Leichtwasserreaktors ein zündfähiges Wasserstoff-Luft-Gemisch entstehen. Dabei wird unter "schwerer Störfall" der bei modernen Leichtwasserreaktoren sehr unwahrscheinliche Fall des Kernschmelzens verstanden. Eine Vorstufe davon trat bei dem TMI-Störfall 1979 in den USA auf. Die im oberen Bereich des Reaktorkerns aufgetretene Überhitzung der Brennelemente kam dabei zum Stillstand, und eine große Menge von Wasserstoffgas ($H_2$), die im Containment samt Luft eingeschlossen war, konnte ohne Gefährdung der anliegenden Gebiete beseitigt werden. Wenn ein solches Gasgemisch bei hoher Wasserstoff-Konzentration unkontrolliert zündet, wird der Reaktorsicherheits-Behälter durch Explosionsdruck und -temperatur hoch belastet. Eine gezielte frühzeitige Zündung des $H_2$-Luft-Gemisches bei niedriger Wasserstoff-Konzentration minimiert diese Belastungen und verhindert ein Undichtwerden des Sicherheitsbehälters.

Vorschläge, wie unerwünschte Wasserstoff-Mengen im Containment beseitigt werden können, gibt es schon seit langem. Durch die DE-OS 22 39 952 ist eine (nicht gattungsgemäße) Einrichtung bekannt, bei der eine Rekombinationseinrichtung ("Rekombinator") zum Verbinden von Wasserstoff ($H_2$) und Sauerstoff ($O_2$) zu Wasser im Containment angeordnet ist. Die beiden miteinander reagierenden Gase werden auf eine geeignete Reaktionstemperatur von mindestens 620° C, vorzugsweise auf 760° C, aufgeheizt. Ein solcher Rekombinator beansprucht verhältnismäßig viel Raum.

Es ist deshalb auch schon ein kompakteres Gasverbrennungs-System für Kernreaktoren entwickelt worden, z.B. nach der DE-OS 20 16 800, das als "Stöpselbrenner" bezeichnet wird. Dabei werden $H_2$ und $O_2$ durch gesinterte, poröse Kupferplatten geleitet, die von Kühlröhrchen durchzogen sind. Die beiden Gase verbrennen an und in diesen porösen Kupferplatten. Der wassergekühlte "Stöpselbrenner" benötigt mindestens eine Zündquelle, er ist insbesondere für Siedewasser-Kernreaktoranlagen geeignet, wo nicht nur im Störfall, sondern schon während des Normalbetriebes durch Radiolyse bedingt Wasserstoff anfällt, der zu beseitigen ist.

Durch die DE-PS 30 04 677 ist es bekannt, in allen Bereichen des Sicherheitsbehälters eines Kernreaktors, in denen Wasserstoff auftreten kann, Zündeinrichtungen anzuordnen. Die Zündeinrichtungen sind in einem Raster angeordnet, dessen Abstand von dem Gefährdungspotential des jeweiligen Bereiches abhängig ist. Hierbei werden als Zünder Glühkerzen, Zündkerzen oder katalytische Zünder verwendet. Katalytische Zünder unterliegen einer Verschmutzung und deshalb der Ungewißheit, ob sie im Notfall wirklich funktionieren. Glühkerzen und Zündkerzen bedürfen einer Energieversorgung über Kabel, diese erfolgt in aller Regel von der Notstromversorgung, diese kann jedoch im vorerwähnten Störfall ausfallen.

Der vorliegenden Erfindung liegt die Aufgabe zugrunde, die Einrichtung der eingangs genannten Art so auszugestalten, daß mit hoher Sicherheit die Bildung größerer Volumina von zündfähigen Wasserstoff-Luft-Gemischen verhindert wird. Eine weitere Aufgabe besteht darin, eine betriebssichere, druckfeste Chassis- und Gehäusekonstruktion für die Einrichtung anzugeben, in welcher die Zündquelle einschließlich Energiespeicher, Auslöseelementen und den verbindenden elektrischen und mechanischen Leitungen drucksicher und hochspannungsfest untergebracht werden kann.

Erfindungsgemäß wird die gestellte Aufgabe bei einer Einrichtung der eingangs genannten Art durch die folgenden Merkmale gelöst: a) die Zündquelle ist mit einem autarken Energiespeicher versehen, b) zur Auslösung des Zündvorgangs ist wenigstens ein erstes temperaturabhängig ansprechendes Auslöseelement und wenigstens ein zweites druckabhängig ansprechendes Auslöseelement vorgesehen, wobei das erste Auslöseelement in wärmeleitendem Kontakt und das zweite Auslöseelement in drucküberstragendem Kontakt mit dem zu überwachenden Gasgemisch stehen, c) die beiden Auslöseelemente sind so geschaltet, daß bei Ansprechen von nur einem der Auslöseelemente die Entladung des Energiespeichers in den Funkenzünder veranlaßt wird, wobei während eines Störfalls, der sich über einen längeren Zeitraum erstrecken kann, Zündfunken am Funkenzünder entstehen, die sich während dieses Zeitraums in zeitlichen Abständen wiederholen. Vorteilhafte Weiterbildungen sind in den Patentansprüchen 2 bis 14 angegeben.

Unter "autark" wird verstanden, daß der Energiespeicher keiner Zuleitungen bedarf, seien es Kabel oder andere Energietransportleitungen, so daß eine Abhängigkeit von einem oder einer entfernt angeordneten Energiespeicher bzw. Energiequelle entfällt. Dieser bzw. diese sind vielmehr unmittelbar der Zündquelle zugeordnet.

In bevorzugter Ausführung ist der Energiespeicher die Trockenbatterie oder Trockenbatterieanordnung einer Hochspannungs-Zündeinheit mit federbelastetem oder elektronischem Schalter im Stromkreis der Trockenbatterie sowie mit Hochspannungsmodul, Ladekondensator und Funkenzünder. Dieser elektronische oder federbelastete Schalter sei im folgenden als "Auslöseschalter" bezeichnet; er weist mindestens zwei zueinander parallel geschaltete Kontaktstrecken auf, wobei die eine Kontaktstrecke von dem Sensor wenigstens eines ersten Auslöseelementes und die andere Kontaktstrecke von dem Sensor wenigstens eines zweiten Auslöseelementes betätigbar ist. Ein Auslöseelement umfaßt wenigstens eine Kontaktstrecke und wenigstens einen diese steuernden Sensor. Besonders günstig ist es, wenn der Auslöseschalter eine weitere parallel geschaltete Kontaktstrecke aufweist, welche eine Reed-Kontaktstrecke sein kann, welche zugleich den magnetfeldabhängigen Sensor verkörpert. Durch einen von außen an die Einrichtung herangeführten Testmagneten kann diese Reed-Kontaktstrecke geschlossen und so künstlich ein Funkenüberschlag an dem Funkenzünder erzeugt werden, womit außerdem der Nachweis über die ordnungsgemäße Funktion der Zündquelle bzw. den noch ausreichenden Ladezustand der Batterie gegeben ist. Als Batterie oder Batterieanordnung wird gemäß einer bevorzugten Ausführungsform ein Lithium-Sammler verwendet, der auch bei höheren Temperaturen in der Größenordnung von 200° C zufriedenstellend, d.h. einwandfrei über einen Zeitraum von etwa 4 bis 5 Tagen, arbeitet.

Die mit der Erfindung erzielbaren Vorteile sind vor allem darin zu sehen, daß die Redundanz und Ansprechsicherheit der Einrichtung wesentlich erhöht sind. Wenn sich ein zündfähiges $H_2$-Luft-Gemisch bildet, so wird damit eine Temperaturerhöhung, eine Druckerhöhung oder beides verbunden sein. Dadurch, daß die Einrichtung nach der Erfindung wenigstens zwei Auslöseelemente aufweist, und zwar temperaturabhängig und druckabhängig ansprechende Auslöseelemente, ist die Gewähr gegeben, daß wenigstens ein Signal zu einer Auslösung führt. Dies kann ein Temperatursignal oder ein Drucksignal sein. Zudem wird die Sicherheit bei Ausfall eines Auslöseelementes vergrößert. Die an sich schon hohe Zuverlässigkeit der Einrichtung nach der Erfindung kann noch weiter vergrößert werden, wenn man pro Auslöseelement wenigstens zwei Sensoren mit zugehörigen Kontaktstrecken vorsieht, so daß wenigstens zwei Sensoren auf die eine physikalische Größe (insbesondere Temperatur) und wenigstens zwei weitere Sensoren des anderen Auslöseelementes auf die andere physikalische Größe (insbesondere Druck) ansprechen.

Dies ergibt eine Eins-von-vier-Auslösebedingung. Eine (bei Vorhandensein einer Reed-Kontaktstrecke) vierte Art eines Auslöseelementes könnte wenigstens einen Gasanalysator enthalten, der auf die $H_2$-Konzentration des von der Einrichtung überwachten Wasserstoff-Luft-Gemisches anspricht, so daß eine weitere physikalische Größe als Kriterium zur Auslösung von Zündvorgängen zur Verfügung steht.

Im folgenden werden anhand der Zeichnung Ausführungsbeispiele der Erfindung und weitere Vorteile beschrieben. Weiterhin wird die Wirkungsweise des Erfindungsgegenstandes näher erläutert. In der Zeichnung zeigen in vereinfachter Darstellung:

FIG 1 die prinzipielle Ausführung einer einfachen Einrichtung nach der Erfindung mit Zündquelle einschließlich Trockenbatterie, Hochspannungsmodul und Funkenstrecke, wobei die Einrichtung drei unabhängig voneinander ansprechende Auslöseelemente aufweist;

FIG 2 eine Variante der Einrichtung nach FIG 1, wobei das Schaltbild detaillierter dargestellt ist, mit Taktgenerator, Schutzdiode und Hochspannungs-Zündtransformator;

FIG 3 die elektrisch-mechanische Ausgestaltung der Einrichtung nach FIG 2 in einem Längsschnitt;

FIG 4 den Gegenstand nach FIG 3 in einem um 90° gedrehten Längsschnitt;

FIG 5 den Schnitt nach der Schnittebene V-V aus FIG 3;

FIG 6 den Schnitt nach der Schnittebene VI-VI aus FIG 3 und

FIG 7 die Ansicht auf die Einrichtung nach FIG 3 von unten.

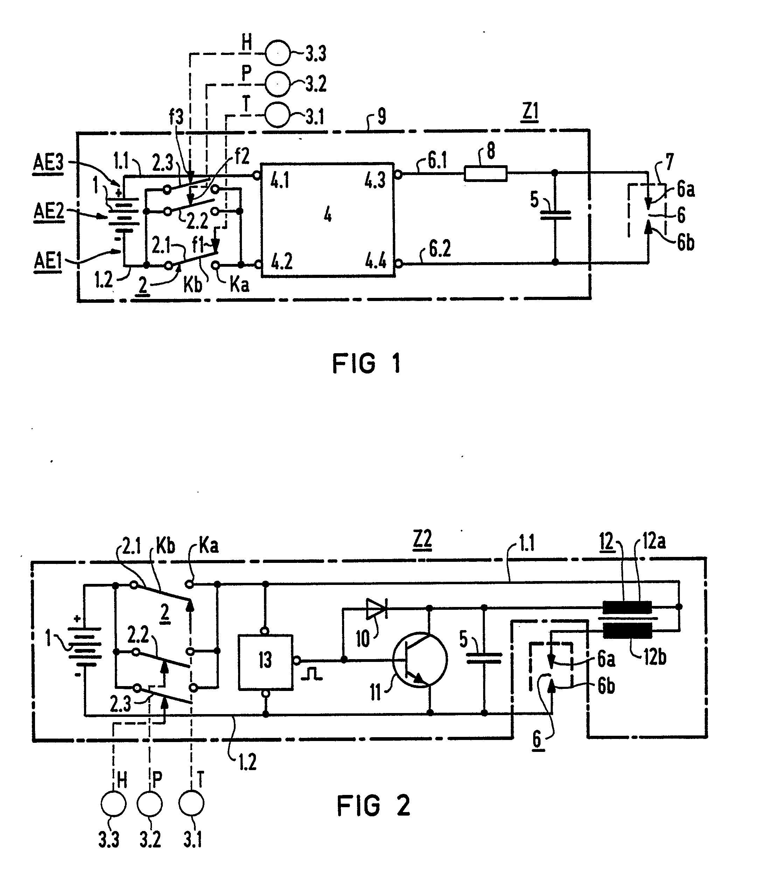

Gemäß Figur 1 sind die Plusleitung 1.1 und die Minusleitung 1.2 einer Trockenbatterie 1 an die Eingangsklemmen 4.1, 4.2 eines Hochspannungsmoduls 4 angeschlossen, wobei in der Minusleitung 1.2 ein mehrpoliger Schalter 2 eingeschaltet ist, welcher im dargestellten Fall drei parallel zueinander liegende Kontaktstrecken 2.1, 2.2 und 2.3 aufweist. Durch die Wirkungspfeile f1, f2 und f3 ist zum Ausdruck gebracht, daß die in der Offen-Stellung dargestellten Kontaktstrecken durch von außen auf sie einwirkende Einflußgrößen, sobald diese einen einstellbaren Grenzwert überschreiten, geschlossen werden können. Im Beispiel bedeutet f1 eine der Temperatur T des zu überwachenden Gasgemisches des Containments einer Kernreaktoranlage analoge Größe, f2 eine dem Druck P dieses Gasgemisches analoge Größe und f3 eine dem Magnetfeld H eines Testmagneten analoge Größe. Mit dem Magnetfeld H kann willkürlich die als Reed-Kontakt ausgebildete Kontaktstrecke 2.3 zu Testzwecken, d.h. zur Überprüfung des Ladezustandes der Trockenbatterie 1 und der Funktion des Funkenzünders 6, geschlossen werden. Die Kontaktstrecken 2.1 bis 2.3 weisen jeweils Festkontakte $K_a$ und bewegliche Kontakte $K_b$ auf. Es kann sich dabei um elektro-mechanische Schalter handeln, die in Öffnungsrichtung federbelastet sind und die, wenn die Einflußgrößen f1 bis f3 den erwähnten Grenzwert überschreiten, im Schließsinne betätigt werden. Die Kontaktstrecken 2.1 bis 2.3 können auch durch elektronische Schalter gebildet werden. Als Temperatur Druck- bzw. magnetfeldabhängige Meßwertaufnehmer dienen schematisch eingezeichnete Sensoren 3.1 (Temperatur-Sensor), 3.2 (Druck-Sensor) und 3.3 (Reed-Kontaktstrecke), deren gestrichelte Wirkungslinien andeuten, daß bei Überschreiten der genannten Grenzwerte analoge Kontaktschließ-Einflußgrößen f1 bzw. f2 bzw. f3 erzeugt werden. Das erste Auslöseelement AE1 umfaßt den Temperatur-Sensor 3.1 und die Kontaktstrecke 2.1, das zweite Auslöseelement AE2 den Druck-Sensor 3.2 und die Kontaktstrecke 2.2 und das dritte Auslöseelement AE3 den magnetfeldabhängigen Sensor 3.3 und die Kontaktstrecke 2.3.

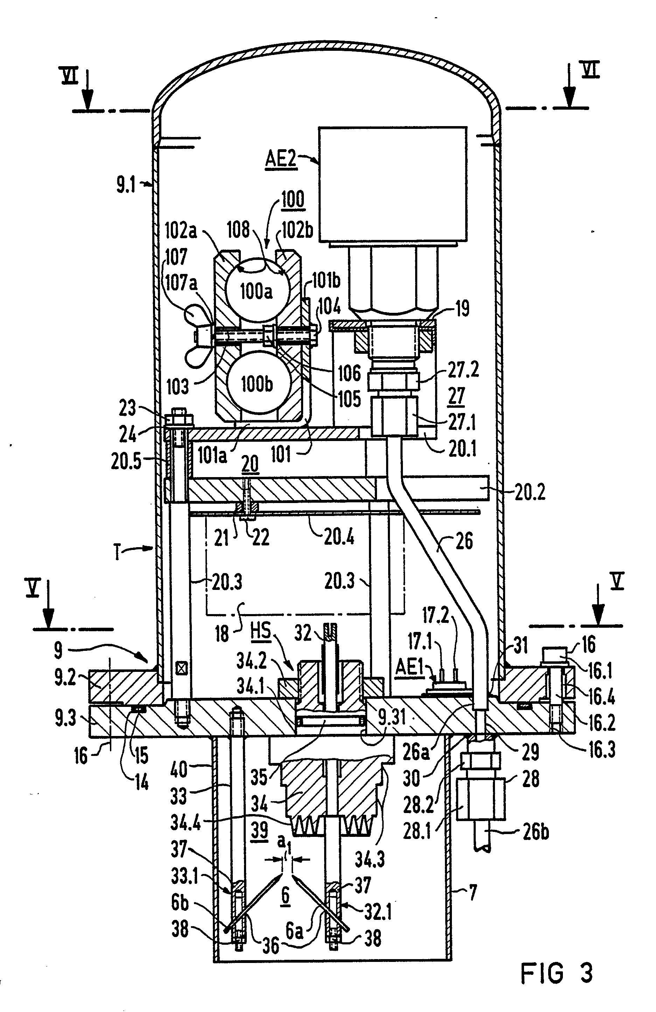

An die Plus- bzw. Minus-Ausgangsklemmen 4.3 bzw. 4.4 des Hochspannungsmoduls 4 ist die Funkenstrecke 6a-6b eines elektrischen Funkenzünders 6 über elektrische Hochspannungsleitungen 6.1 bzw. 6.2 angeschlossen. In der Leitung 6.1 ist ein Ladewiderstand 8 angeordnet, und zwischen dem Ladewiderstand 8 und der Funkenstrecke 6 sind die beiden Leitungen 6.1, 6.2 durch einen Ladekondenstator 5 miteinander verbunden. Der Funkenzünder 6 ist mit einem gasdurchlässigen Spritzschutz 7 versehen. Wie erkennbar, sind alle Bauteile dieser als Ganzes mit Z1 bezeichneten Zündquelle, mit Ausnahme des Funkenzünders 6, feuchtigkeits-, druck- und temperaturgeschützt innerhalb eines Metallgehäuses 9 untergebracht und darin verkabelt. Die Wand des Metallgehäuses 9 wird lediglich von den elektrischen Zuleitungen des Funkenzünders 6 und einer Druckmeßleitung (in Figur 1 nicht dargestellt, jedoch später anhand von Figur 3 erläutert) durchdrungen.

Im Auslösefall, z.B. bei Übertemperatur des zu überwachenden Gasgemisches, wird ein einstellbarer Temperaturgrenzwert überschritten. Dann wird gemäß Pfeil f1 das temperaturabhängig ansprechende Auslöseelement AE1 zum Ansprechen gebracht. Dabei handelt es sich gemäß einer günstigen Ausführungsform um einen Thermoschalter (in Figur 1 nicht gezeigt). Die Kontaktstrecke 2.1, die also von einem Thermoschalter betätigt werden kann, wird geschlossen, und der Hochspannungsmodul 4 wird von der Trockenbatterie 1 mit Gleichstrom versorgt. Die in diesem Hochspannungsmodul 4 erzeugte Hochspannung wird an dessen Klemmen 4.3, 4.4 abgenommen; sie erzeugt über die RC-Kombination 8, 5 eine sägezahnförmig verlaufende Zündhochspannung an den beiden Zündelektroden 6a, 6b. Der zeitliche Abstand der Zündimpulsfolgen (Taktzeit) kann mehrere Minuten betragen, weil nach dem jeweiligen, intermittierend betriebenen "Abfackeln" bzw. Verbrennen eines Wasserstoffvolumens eine bestimmte Zeit vergeht, bis wieder ein zündfähiges Gemisch vorliegt. Die Batterie 1 hat eine solche Kapazität, daß die taktenden bzw. intermittierend betriebenen Zündvorgänge sich über mehrere Tage erstrecken können. Das Hochspannungsmodul 4 ist eine bevorzugt elektronische Baueinheit, welche die Gleichspannung von der Niedervolt-Trockenbatterie auf die erforderliche Hoch- bzw. Funkenspannung transformiert. Es formt zugleich den Gleichstrom in einen transformierbaren Impulsstrom um. Grundsätzlich könnte bei der Zündquelle Z1 nach Figur 1 anstelle eines elektronischen Schalters oder Unterbrechers (z.B. Transistors) auch ein mechanischer Unterbrecher vorgesehen sein, wenn auch der elektronischen Ausführung der Vorzug gegeben wird.

Bei der Zündquelle Z2 nach Figur 2 sind einige Schaltelemente des Hochspannungsmoduls detaillierter dargestellt. Ein Taktgenerator 13 gibt im Falle des Schließens einer der Kontaktstrecken 2.1 bis 2.3 des Schalters 2 eine Impulsfolge an die Basis eines nachgeschalteten Hochspannungs-Transistor 11 ab. Dessen Basis-Kollektor-Strecke ist eine Schutzdiode 10 parallel geschaltet. Sein Emitter liegt an der Minusleitung 1.2. Der Ladekondensaotor 5 ist zwischen Emitter und Kollektor geschaltet. In den Weg zwischen Plusleitung 1.1 der Trockenbatterie 1 und Kollektor ist die Primärwicklung 12a eines Zündtransformators 12 eingeschaltet. Diese wird bei leitendem Transistor 11 über die Emitter-Kollektor-Strecke vom Batteriestrom durchflossen. Sie speichert dabei induktive Energie. Wird der Transistor 11 durch eine entsprechende Basisvorspannung gesperrt, so wird in der Sekundärwicklung 12b eine Hoch- oder Zündspannung induziert. Diese führt zu Entladungen als Zündfunken an der Funkenstrecke 6. Der Transistor 11 arbeitet ähnlich wie der Transistor einer Transistorzündung in einem Kraftfahrzeug.

Die vorbeschriebenen Zündquelle Z1 (Figur 1) bzw. Z2 (Figur 2) dienen zur kontrollierten Verbrennung von zündfähigen Wasserstoff-Luft-Gemischen in einer kerntechnischen Anlage. Darunter werden insbesondere Kernreaktoranlagen mit wassergekühlten Kernreaktoren verstanden, also Druckwasser-, Siedewasser- oder Schwerwasser-Kernreaktoranlagen, die innerhalb einer druckfesten Stahl- und/oder Betonhülle ein Containment aufweisen, in welchem in einem Störfall ein zündfähiges Wasserstoff-Luft-Gemisch entstehen kann. Dieses wird durch Einsatz von Zündquellen Z1 und/oder Z2, welche innerhalb des Containments verteilt angeordnet sind, gezielt zum Verbrennen gebracht. Aus Figur 1 und Figur 2 ist das Grundkonzept erkennbar:

a) Die Zündquelle ist mit einem autarken, in regelmäßigen Zeitabständen auf seinen Ladezustand überprüfbaren Energiespeicher 1 versehen. Dieser ist bevorzugt eine Trockenbatterie, die bis zu einem Temperaturniveau von ca. 200° C zuverlässig arbeitet. Besonders dafür geeignet sind sogenannte Lithium-Sammler.

b) Zur Auslösung des Zündvorganges ist außer wenigstens einem ersten temperaturabhängig ansprechenden Auslöseelement AE1 wenigstens ein zweites druckabhängig ansprechendes Auslöseelement AE2 vorgesehen, wobei das erste Auslöseelement AE1 mit seinem Temperatur-Sensor 3.1 in wärmeleitenden Kontakt mit dem zu überwachenden Gasgemisch steht und das zweite Auslöseelement AE2 mit seinem Druck-Sensor 3.2 in druckübertragendem Kontakt mit dem zu überwachenden Gasgemisch stehen, wie anhand der Figuren 3 bis 7 noch erläutert wird. beim dritten Auslöseelement AE3, wozu der magnetfeldabhängige Sensor 3.3, die Kontaktstrecke 2.3, der Wirkungspfeil f3 gehören, handelt es sich um eine Funktionsprüfeinrichtung, die ebenfalls noch erläutert wird. Es wäre, wie eingangs bereits erläutert, jedoch auch möglich, ein weiteres Auslöseelement vorzusehen, welches auf eine andere physikalische Größe anspricht, z.B. auf die $H_2$-Konzentration im zu überwachenden Gasgemisch (nicht dargestellt).

c) Die mindestens zwei Auslöseelemente AE1 und AE2 sind so geschaltet, daß bei Ansprechen von nur einem der Auslöseelemente AE1 bzw. AE2 die Entladung des Energiespeichers 1 in den Funkenzünder 6 veranlaßt wird, wobei während eines Störfalls, der sich über einen längeren Zeitraum von z.B. drei bis fünf Tagen erstrekken kann, Zündfunken am Funkenzünder 6 entstehen, die sich während dieses Zeitraums in zeitlichen Abständen wiederholen. Die Auslöseelemente AE1, AE2 sind also im Sinne einer Oder-Bedingung miteinander verknüpft, d.h., ihre Kontaktstrecken 2.1 und 2.2 sind zueinander parallel geschaltet. Die Taktzeit kann, wie gesagt, insbesondere mehrere Minuten betragen, weil nach Verbrennen eines Wasserstoffvolumens eine bestimmte Zeit vergeht, bis wieder ein zündfähiges Gemisch vorliegt.

Figuren 3 bis 7 zeigen die mechanisch-elektrische Verkörperung der Zündquellen nach Figur 1 und 2. Eine druckfeste Kapsel für das Metallgehäuse 9 ist von einer druckfesten Stahlhaube 9.1 gebildet, welche im Bereich der unteren Haubenöffnung einen Ringflansch 9.2 aufweist. Mit diesem Ringflansch 9.2 ist eine massive Bodenplatte 9.3, welche wie die Teile 9.1 und 9.2 gleichfalls aus korrosionsbeständigem Stahl besteht, druckdicht zusammmengeflanscht. Zwischen Ringflansch 9.2 und Bodenplatte 9.3 ist mindestens ein O-Ring 14 eingefügt, welcher von einer entsprechenden Ringnut 15 aufgenommen wird und im dargestellten zusammengespannten Zustand der Teile 9.2, 9.3 unter elastischer Deformation flachgedrückt ist. Die Flanschschrauben sind mit 16 bezeichnet, ihr Kopf mit 16.1, ihr ein Gewinde aufweisender Schaft mit 16.2, eine der zugehörigen Gewindebohrungen in der Bodenplatte 9.3 mit 16.3 und die Durchgangsbohrungen im Ringflansch 9.2 sind mit 16.4 bezeichnet. Nur eine Flanschschraube 16 ist etwas ausführlicher dargestellt; auf der gegenüberliegenen Seite der Flanschverbindung 9.2-9.3 ist eine Flanschschraube 16 durch eine Mittellinie angedeutet.

In die massive Bodenplatte 9.3 ist von deren Innenseite her ein temperaturabhängig ansprechendes Auslöseelement AE1 eingebaut. Dieses Auslöseelement ist kapselförmig und steht in gut wärmeleitendem Kontakt mit der massiven Bodenplatte 9.3. Insbesondere handelt es sich um ein Thermoelement in der Ausführung als sog. Thermoschalter, dessen beide nach oben herausragende Kontaktmesser mit 17.1 und 17.2 bezeichnet sind. Die elektrische Verbindung zwischen diesem Thermoschalter und der gasdicht vergossenen Baueinheit 18 der Zündelektronik (durch ein strichpunktiertes Kästchen dargestellt) erfolgt über ein Steckerkabel (zur Vereinfachung nicht dargestellt). Der genannte Thermoschalter vereinigt in sich einen Temperatur-Sensor und eine Kontaktstrecke.

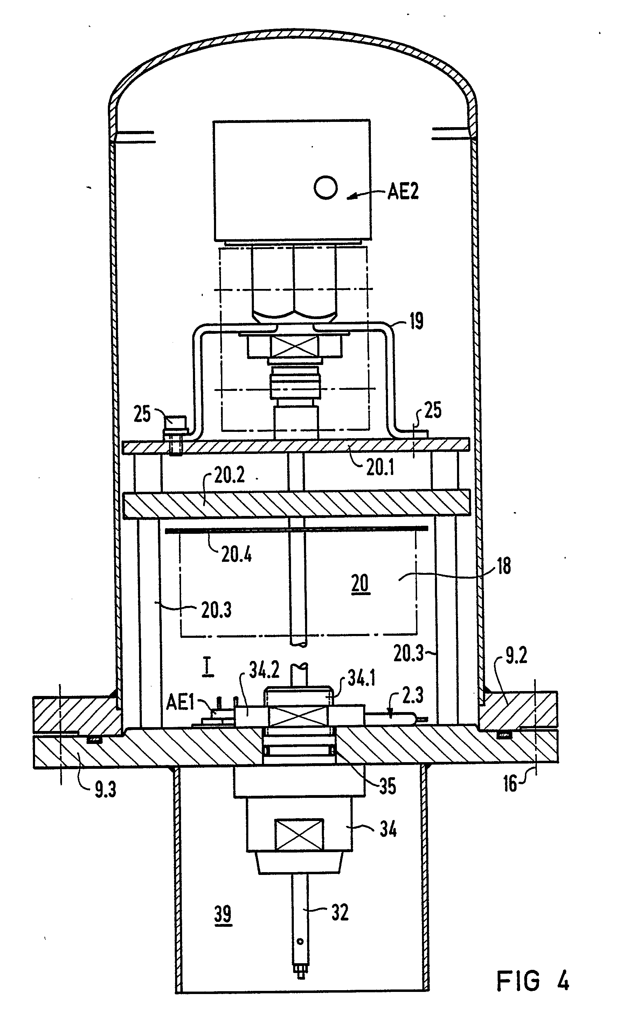

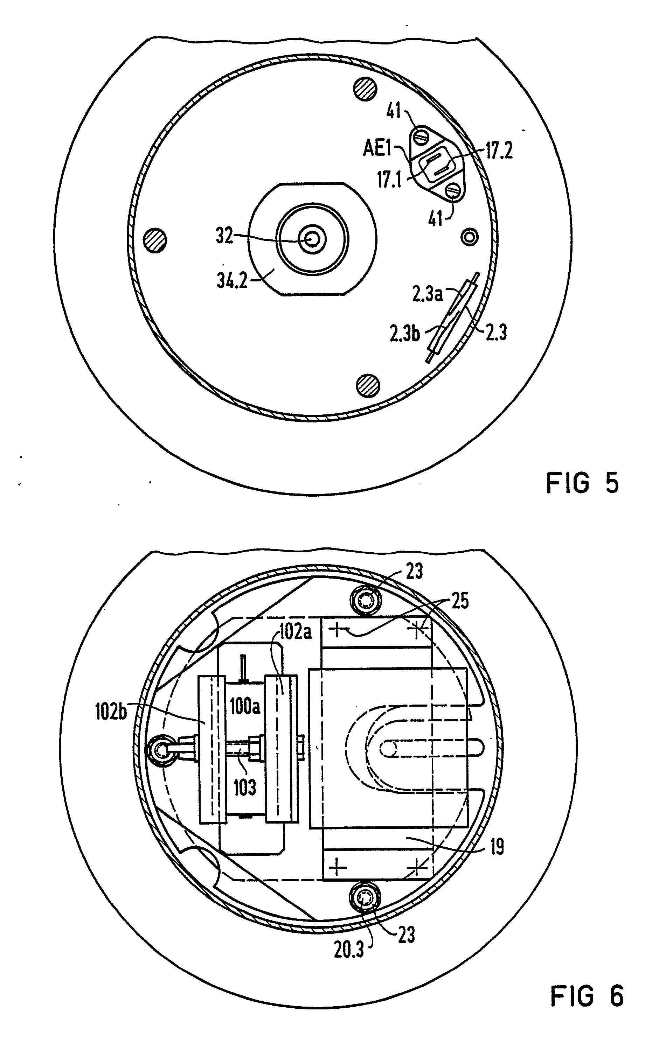

Ein zweites Auslöseelement AE2 (vgl. Figur 1 und 2) ist der Druckschalter AE2, welcher mittels eines Haltebügels 19 (siehe auch Figur 4) an der oberen metallischen Tischplatte 20.1 einer Tischplattenanordnung 20 festgespannt ist. Diese Tischplattenanordnung 20 ist Bestandteil der auf der Innenseite der Bodenplatte 9.3 befestigten Trageinrichtung T, an welcher die Elemente der elektrischen/elektronischen Schaltung der Zündelektronik 18 einschließlich einer Langzeit-Batterieanordnung 100 und wenigstens ein Druckschalter AE2 befestigt sind. Die Trageinrichtung T weist die schon erwähnte Tischplattenanordnung 20 auf, welche über Stehbolzen 20.3 an der Bodenplatte 9.3 beabstandet zu dieser gehalten ist, wobei eine untere Tischplatte 20.2 aus Isolierstoff besteht und an ihrer Unterseite die Baueinheit der Zündelektronik 18 trägt, letztere wird von einem Tragblech 20.4 getragen, welches unter Anfügung von Abstandsscheiben 21 an der Isolierstoffplatte 20.2 festgeschraubt ist, eine der Schrauben ist bei 22 dargestellt. Über Abstandsbüchsen 20.5 ist die obere Tischplatte 20.1 aus Metall parallel bzw. planparallel zur unteren Tischplatte 20.2 von den Stehbolzen 20.3 gehalten, auf deren nach oben aus der oberen Tischplatte 20.1 herausragenden Gewindeenden jeweils Haltemuttern 23 unter Einfügung von Beilagscheiben 24 aufgeschraubt sind (siehe auch Figur 6).

Mit Halteschrauben 25 ist der U-förmige Haltebügel 19 für den Druckschalter AE2 an der oberen Tischplatte 20.1 befestigt (Figuren 4 und 6). Die Druckmeßleitung 26 ist durch die massive Bodenplatte 9.3 druckdicht hindurchgeführt und mit dem Druckschalter AE2 über eine Anschlußarmatur 27 druckfest verbunden. Zu dieser Armatur 27 gehört eine Überwurfmutter 27.1, mit welchem ein (nicht dargestelltes) konisches Mundstück mit einem entsprechend konisch geformten Gegenmundstück der Anschlußleitung 27.2 des Druckschalters AE2 gekuppelt wird. Eine entsprechende (genormte) Kupplungsstelle befindet sich außerhalb der Bodenplatte 9.3 in Verlängerung der Meßleitung 26 und ist mit 28 bezeichnet. Ebenso wie das Anschlußende 27.2 der Armatur 27 ist hier das Anschlußende 28.2 gehäusefest und mit einem Mehrkant zum Ansetzen von Schraubschlüsseln versehen, das andere Anschlußende mit dem (nicht ersichtlichen) konischen Anschluß-Mundstück wird wieder mittels einer Überwurfmutter 28.1 mit dem Anschlußende 28.2 druckfest verbunden. Letzteres ist als kleiner Stutzen ausgeführt, welcher an der Außenseite der Bodenplatte 9.3 dichtend angeschweißt ist und die Durchgangsbohrung 29 umgibt. Letztere ist dort, wo die Meßleitung 26 mit ihrem Ende 26.a eingefügt ist, etwas erweitert, und dieses Ende 26.a ist ebenfalls dichtend mit der Bodenplatte 9.3 verschweißt (Ringschweißnähte 30, 31).

Der nach außen ragende Leitungsteil 26b der Druckmeßleitung 26 endet in einem nicht dargestellten Druckmeßkopf dort, wo eine geeignete Stelle für die Druckmessung sich befindet. Der Druckmeßkopf kann in einem Abstand von Bruchteilen von Metern bis zu mehreren Metern entfernt von dem Gehäuse 9 angeordnet sein. Wie erwähnt, ist an der oberen Tischplatte auch die Batterieanordnung 100 befestigt. Ein Winkelstück 101 ist mit seinem einen Schenkel 101a an der oberen Tischplatte 20.1 festgeschraubt, und an dem nach oben ragenden Schenkel 101b sind die beiden Haltebacken 102a und 102b mittels des Gewindebolzens 103 unter Einfügung der beiden Batteriekörper 100a, 100b festgespannt. Auf den Gewindebolzen 103, der mit seinem einen Ende an dem Schenkel 101b befestigt ist (siehe festgeschweißte Haltemutter 104) ist die eine Haltebacke 102b aufgeschoben und mittels Mutter und Beilagscheibe 105, 106 gegen den Schenkel 101b festgezogen. Auf das freie Ende des Gewindebolzens 103 wird dann, nachdem die Batterien 100a, 100b eingelegt sind, die zweite Haltebacke 102a aufgeschoben und mittels der Flügelmutter 107 und der Feder-Beilagscheibe 107a verspannt. Die Haltebacken 102a, 102b sind dem Umfang der zu halternden Batterien 100a, 100b entsprechend mit rinnenförmigen Aussparungen 108 versehen. Die elektrischen Verbindungsleitungen von der Batterie 100 und dem Druckschalter AE2 zur Einheit 18 der Zündelektronik sind nicht dargestellt, auch nicht das Verbindungskabel von dieser Zündelektronik 18 zu dem massiven Stift 32, der an seinem äußeren Ende die eine Zündelektrode 6a der beiden Zündelektroden 6a, 6b trägt.

Die Bodenplatte 9.3 ist, bevorzugt zentrisch, mit einer Hochspannungsdurchführung HS für die auf hohem Potential liegende Zündelektrode 6a versehen. Letzterer steht die auf Massepotential liegende Gegenelektrode 6b gegenüber. Die beiden Zündelektroden 6a, 6b sind in ihrer Schlagweite justierbar und an Haltekörpern 32, 33 im Abstand zur Bodenplatte 9.3 gehalten. Der eine dieser Haltekörper ist der schon erwähnte massive Stift 32, welcher einen in die Bodenplatte 9.3 dichtend eingesetzten Hochspannungs-Isolatorkörper 34 zentrisch und dichtend durchdringt und an seinem freien, nach unten ragenden Ende eine justierbare Aufnahme 32.1 für die stift- oder nadelförmige Zündelektrode 6a aufweist. Der Isolatorkörper 34 weist einen Halsteil 34.1 mit O-Ring-Dichtung 35 auf, der die zentrische Bohrung 9.31 in der Bodenplatte 9.3 dichtend durchdringt und auf der Innenseite der Bodenplatte 9.3 durch eine ebenfalls aus mechanisch stabilem Isolierstoff bestehende Mutter 34.2 verspannt ist. Für die Durchführung des massiven Stiftes 32 durch den Isolatorkörper 34 stehen sog. Metall-Keramik-Verbindungen zur Verfügung, die ausreichend temperaturbeständig sind. Zur Vergrößerung der Kriechstrecken ist der Isolatorkörper 34 mit Abstufungen 34.3 und Rippen 34.4 versehen. Die Gegenelektrode 6b ist am freien Ende eines in die Unterseite der Bodenplatte 9.3 eingeschraubten Stehbolzens 33 - ebenfalls innerhalb einer justierbaren Aufnahme 33.1 - gehalten. Beide justierbaren Aufnahmen 32.1, 33.1 weisen jeweils Schrägbohrungen 36 auf, in welche die nadelförmigen Zündelektroden 6a, 6b eingeschoben sind, und zwar derart, daß sie von ihren einander mit kleinstem Abstand $a_1$ gegenüberliegenden Elektrodenspitzen bis zu ihren andern Enden gesehen jeweils zur Horizontalen geneigt verlaufen, womit erreicht wird, daß eventuellen Kondenswasser sofort nach unten abläuft und die durch die Schlagweite $a_1$ gegebene Zündcharakteristik nicht beeinflußen kann. Zu den justierbaren Aufnahmen 32.1 und 33.1 gehören zentrische Bohrungen 37 in den Enden des Stiftes 32 bzw. des Bolzens 33, welche sich mit den Schrägbohrungen 36 schneiden. In die zentrischen Bohrungen sind von außen Klemmschrauben 38 eingeschraubt, welche ebenfalls nicht näher bezeichnete Schrägbohrungen aufweisen und in diesen von den stiftförmigen Zündelektroden 6a bzw. 6b durchdrungen sind. Werden die Klemmschrauben nach dem Einfädeln der Zündelektroden 6a, 6b und nach deren Abstandsjustierung festgezogen, so werden die Zündelektroden fest verspannt, wobei am freien Ende der Klemmschrauben 38 nicht näher bezeichnete Kontermuttern sitzen, die der Verdrehungssicherung dienen.

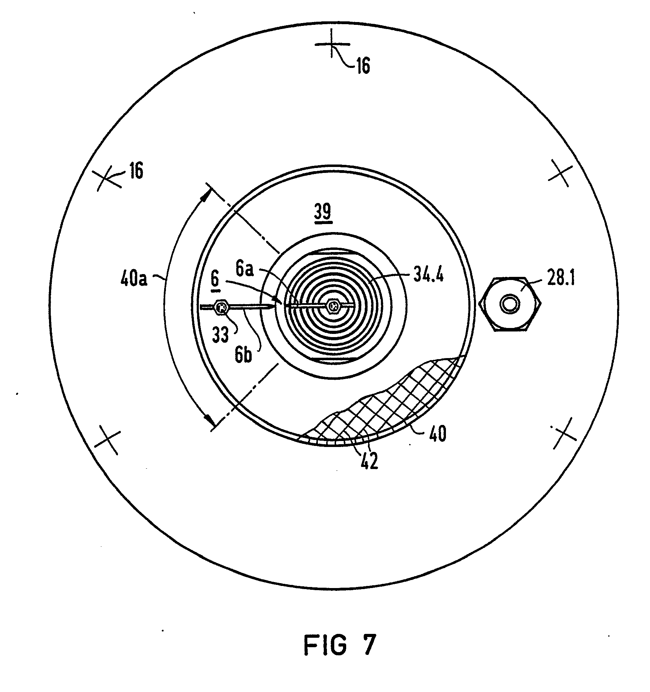

Zum Wind- und Spritzwasserschutz ist ein die Zündelektroden 6a, 6b unmittelbar umgebender Elektroden-Schutzraum 39 unterhalb der Bodenplatte 9.3 von einem Mantelblech 40 umgeben (vgl. auch Fig. 7). Dieses Mantelblech 40 kann im Prinzip siebartig perforiert sein, damit das im Schutzraum 39 befindliche Gasgemisch ein möglichst getreues Abbild des Gasgemisches im Containment ist; im Sektorbereich 40a (Fig. 7) wird aber aus Gründen des Windschutzes für den elektrischen Funkenzünder 6 eine Perforierung weggelassen. Zum Zwecke des Berührungsschutzes ist es weiterhin sinnvoll, die nach unten weisende Öffnung des Mantelbleches 40 durch ein Gitter 42 aus feuerfestem Isolierstoff abzudecken (in Figur 7 im Ausschnitt dargestellt).

Figur 5 zeigt in Draufsicht das Glasröhrchen einer Reed-Kontaktstrecke 2.3. Diese Kontaktstrecke ist in den Figuren 1 und 2 ebenfalls dargestellt; sie verkörpert das dritte Auslöseelement AE3. Dieses wird manuell mittels eines Testmagneten ausgelöst, und dementsprechend bedeuten die Pfeile f3 die der Magnetkraft analoge Größe, welche die Reed-Kontaktstrecke 2.3 schließt, wenn man sich mit einem Testmagneten von außen der Reed-Kontaktstrecke nähert. Damit ist es möglich, ohne daß man das druckfeste Gehäuse 9 öffnet, die Funktion der Trockenbatterie 1 bzw. 100 und der elektronischen/elektrischen Schaltung der Zündelektronik 18 zu überprüfen. Solche Überprüfungen werden in regelmäßigen Zeitabständen vorgenommen, z.B. täglich oder wöchentlich, und -wenn die Prüfung ergibt, daß der Ladezustand der Batterieanordnung 1 bzw. 100 nicht mehr ausreichend ist - werden die Batterien erneuert. Es kann sich dabei auch um aufladbare Batterien handeln.

Die elektrischen Zuleitungen der Reed-Kontaktstrecke sind nicht dargestellt; die magnetisch in die Schließstellung bringbaren Kontaktzungen sind bei 2.3a und 2.3b angedeutet. Aus Figur 5 erkennt man noch den Grundriß des Gehäuses des Thermoschalters AE1, der ähnlich dem Sockel einer Radioröhre ausgebildet und mittels Befestigungsschrauben 41 an der Bodenplatte 9.3 festgeschraubt ist.

**Ansprüche**

1. Einrichtung zur kontrollierten Verbrennung eines zündfähigen Wasserstoff-Luft-Gemisches, enthalten im Gasgemisch in einer kerntechnischen Anlage, insbesondere im Containment einer Kernreaktoranlage, mit wenigstens einer Zündquelle (Z1, Z2), an die ein Funkenzünder (6) zur Auslösung eines Zündvorgangs angeschlossen ist, **gekennzeichnet durch** die folgenden weiteren Merkmale:

a) Die Zündquelle (Z1; Z2) ist mit einem autarken Energiespeicher (1; 100) versehen,

b) zur Auslösung des Zündvorgangs ist wenigstens ein erstes temperaturabhängig ansprechendes Auslöseelement (AE1) und wenigstens ein zweites druckabhängig ansprechendes Auslöseelement (AE2), wobei das erste Auslöseelement (AE1) in wärmeleitendem Kontakt und das zweite Auslöseelement (AE2) in druckübertragendem Kontakt mit dem zu überwachenden Gasgemisch stehen,

c) die beiden Auslösseelemente (AE1, AE2) sind so geschaltet, daß bei Ansprechen von nur einem der Auslöseelemente (AE1, AE2) die Entladung des Energiespeichers (1, 100) in den Funkenzünder (6) veranlaßt wird, wobei während eines Störfalls, der sich über einen längeren Zeitraum erstrecken kann, Zündfunken am Funkenzünder (6) entstehen, die sich während dieses Zeitraums in zeitlichen Abständen wiederholen.

2. Einrichtung nach Anspruch 1, **dadurch gekennzeichnet,** daß eine elektrische/elektronische Schaltung zur Erzeugung von Hochspannungs-Zündfunken im Falle des Ansprechens des ersten oder zweiten Auslöseelementes (AE1, AE2) und daß ein druckfestes Gehäuse (9) mit einer massiven Bodenplatte (9.3) vorgesehen ist, wobei wenigstens ein temperaturabhängig ansprechendes Auslöseelement (3.1) an der Innenseite der Bodenplatte (9.3) in wärmeleitendem Kontakt mit dieser montiert ist, daß die Bodenplatte (9.3) mit einer Hochspannungsdurchführung (HS) für eine auf hohem Potential liegende Zündelektrode (6a) versehen ist, welcher eine auf Massepotential liegende Gegenelektrode (6b) gegenübersteht, und daß an einer auf der Innenseite der Bodenplatte (9.3) befestigten Trageinrichtung (T) die Elemente der elektrischen/elektronischen Schaltung (18) einschließlich einer Langzeit-Batterieanordnung (100) und wenigstens ein Druckschalter (AE2) befestigt sind, welch letzterer an eine das Gehäuse (9) druckdicht durchdringende Druckmeßleitung (26) angeschlossen ist.

3. Einrichtung nach Anspruch 2, **dadurch gekennzeichnet,** daß beide Zündelektroden (6a, 6b), in ihrer Schlagweite ($a_1$) justierbar, an Haltekörpern (32, 33) im Abstand zur Bodenplatte (9.3) gehalten sind.

4. Einrichtung nach Anspruch 2 oder 3, **dadurch gekennzeichnet,** daß die Druckmeßleitung (26) die Bodenplatte (9.3) durchdringt.

5. Einrichtung nach einem der Ansprüche 2 bis 4,

**dadurch gekennzeichnet,** daß der Haltekörper (32) der Hochspannungs-Zündelektrode (6a) ein massiver Stift ist, welcher einen in die Bodenplatte (9.3) dichtend eingesetzten Hochspannungs-Isolatorkörper (34) zentrisch durchdringt und an seinem freien, nach unten ragenden Ende eine justierbare Aufnahme (32.1) für die eine (6a) der stift- oder nadelförmigen Zündelektroden (6a, 6b) aufweist.

6. Einrichtung nach einem der Ansprüche 2 bis 5,

**dadurch gekennzeichnet,** daß die Gegenelektrode (6b) am freien Ende eines in die Unterseite der Bodenplatte (9.3) eingeschraubten Stehbolzens (33) in einer entsprechenden justierbaren Aufnahme (33.1) gehalten ist.

7. Einrichtung nach einem der Ansprüche 2 bis 6,

**dadurch gekennzeichnet,** daß stift-oder nadelförmige Zündelektroden (6a, 6b) von ihren einander mit kleinstem Abstand ($a_1$) gegenüberliegenden Elektrodenspitzen bis zu ihren anderen Enden gesehen jeweils zur Horizontalen geneigt verlaufen.

8. Einrichtung nach einem der Ansprüche 2 bis 7,

**dadurch gekennzeichnet,** daß zum Wind-und Spritzwasserschutz ein die Zündelektroden (6a, 6b) unmittelbar umgebender Elektroden-Schutzraum (39) unterhalb der Bodenplatte (9.3) von einem Mantelblech (40) umgeben ist.

9. Einrichtung nach Anspruch 8,

**dadurch gekennzeichnet,** daß die nach unten weisende Öffnung des Mantelbleches (40) zum Berührungsschutz mit einem grobmaschigen, den Zündvorgang nicht beeinträchtigenden Gitter (42) abgedeckt ist.

10. Einrichtung nach Anspruch 9,

**dadurch gekennzeichnet,** daß das Gitter (42) aus einem feuerfesten Isolierstoff besteht.

11. Einrichtung nach einem der Ansprüche 1 bis 10,

**dadurch gekennzeichnet,** daß eine druckfeste Kapsel für das Gehäuse (9) von einer druckfesten Stahlhaube (9.1) mit Ringflansch (9.2) im Bereich der Haubenöffnung und der massiven Bodenplatte (9.3) gebildet ist, wobei der Ringflansch (9.2) und die Bodenplatte (9.3) druckdicht zusammengeflanscht sind.

12. Einrichtung nach einem der Ansprüche 1 bis 11,

**dadurch gekennzeichnet,** daß zusätzlich ein drittes magnetisch ansprechendes Auslöseelement (AE3) vorgesehen ist, das bei Ansprechen ebenfalls die Entladung des Energiespeichers (1, 100) in dem Funkenzünder (6) veranlaßt.

13. Einrichtung nach Anspruch 12,

**dadurch gekennzeichnet,** daß elektrisch parallel zu den Kontaktstrecken (2.1, 2.2) der Auslöseelemente (AE1, AE2) eine Reed-Kontaktstrecke (2.3) geschaltet und das Röhrchen der Reed-Kontaktstrecke auf der Innenseite der Bodenplatte (9.3) so angeordnet ist, daß durch magnet-betätigtes Schließen der Reed-Kontaktstrecke von außen die Funktion der Zündquelle (Z1, Z2) und der Ladezustand einer als Energiespeicher dienenden Batterie (100) überprüfbar ist.

14. Einrichtung nach Anspruch 2,

**dadurch gekennzeichnet,** daß die Trageinrichtung (T) eine über Stehbolzen (20.3) an der Bodenplatte (9.3) beabstandet zu dieser gehaltene Tischplatten-Anordnung (20) aufweist, mit einer unteren Tischplatte (20.2) aus Isolierstoff, an deren Unterseite die Baueinheit der elektrischen/elektronischen Zündschaltung (18) befestigt ist, und mit einer oberen Tischplatte (20.1) aus Metall, an welcher die Batterie-Anordnung (100) und wenigstens ein Druckschalter (AE2) befestigt sind.

## FIG 1

H ◯ 3.3
P ◯ 3.2
T ◯ 3.1

AE3 → 1.1
AE2 →
AE1 →

1
2.3  f2
2.2
2.1  f1
f3
Kb  Ka
1.2
2

4.1    4.3
4
4.2    4.4

9    Z1

6.1    8
5
6.2

7
6a
6
6b

**FIG 1**

## FIG 2

2.1  Kb  Ka
Z2    1.1    12  12a

1
2.2
2
2.3
1.2

13
10
11
5

6a
6b
6

12b

H  P  T
3.3  3.2  3.1

**FIG 2**

FIG 3

FIG 4

FIG 5

FIG 6

**FIG 7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | DE-A-3 705 193 (KIEKEBUSCH et al.) * Spalte 3, Zeilen 3-4; Ansprüche 1,5-7,10 * --- | 1,2,12, 13 | G 21 C 19/30 G 21 C 9/00 F 23 Q 3/00 |
| P,X | EP-A-0 289 907 (SIEMENS) * Spalte 2, Zeile 43 - Spalte 3, Zeile 22; Spalte 4, Zeilen 42-43; Figur 2; Spalte 5, Zeilen 3-16 * --- | 1,2 | |
| A | US-A-4 425 495 (CAKE et al.) * Anspruch 1 * --- | 1,2,8, 11 | |
| A,D | DE-A-3 004 677 (BABCOCK-BROWN BOVERI) * Ansprüche 1,5; Seite 4, Zeilen 11-15 * --- | 1-3,5-7 | |
| A | EP-A-0 233 564 (KFA JÜLICH) * Spalte 1, Zeilen 10-19; Spalte 2, Zeilen 34-39 * ----- | 1 | |

**RECHERCHIERTE SACHGEBIETE (Int. Cl.4)**

G 21 C
F 23 Q

Der vorliegende Recherchenbericht wurde für alle Patentansprüche erstellt

| Recherchenort | Abschlußdatum der Recherche | Prüfer |
|---|---|---|
| DEN HAAG | 18-07-1989 | FRITZ S.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes Dokument